# EUROPÄISCHE PATENTSCHRIFT

(11) **EP 4 483 088 B1**
(45) Veröffentlichungstag und Bekanntmachung des Hinweises auf die Patenterteilung: **19.11.2025**
(21) Anmeldenummer: 23700656.4
(22) Anmeldetag: 10.01.2023
(51) Int. Cl.: F17C 13/04

(54) **ABSPERRVENTIL SOWIE WASSERSTOFFTANKSYSTEM MIT ABSPERRVENTIL**
SHUT-OFF VALVE, AND HYDROGEN TANK SYSTEM COMPRISING A SHUT-OFF VALVE
SOUPAPE D'ARRÊT ET SYSTÈME DE RÉSERVOIR À HYDROGÈNE COMPRENANT UNE SOUPAPE D'ARRÊT

(30) Priorität: 25.02.2022 DE 102022201983
(43) Veröffentlichungstag der Anmeldung: 01.01.2025
(73) Patentinhaber: Robert Bosch GmbH, 70442 Stuttgart (DE)
(72) Erfinder: SCHAICH, Udo, 70378 Stuttgart (DE); RAU, Andreas, 70469 Stuttgart (DE); SOUBARI, Joachim, 76275 Ettlingen (DE)
(86) Internationale Anmeldenummer: PCT/EP2023/050400
(87) Internationale Veröffentlichungsnummer: WO 2023/160891

(56) Entgegenhaltungen:
- WO-A1-2020/158728
- DE-A1- 102018 215 380
- DE-A1- 102018 221 600
- US-A1- 2014 239 207
- US-A1- 2015 184 805
- US-A1- 2018 038 507
- US-B2- 6 675 831

## Beschreibung

Die Erfindung betrifft ein Absperrventil für ein Wasserstofftanksystem. Ferner betrifft die Erfindung ein Wasserstofftanksystem mit einem erfindungsgemäßen Absperrventil.

### Stand der Technik

Bekannt sind Wasserstofftanksysteme für Kraftfahrzeuge bzw. mobile Wasserstofftanksysteme, die der Versorgung von Brennstoffzellen oder Verbrennungsmotoren mit Wasserstoff dienen. Für den Fall eines Defekts, beispielsweise eines Leitungsbruchs, oder eines Unfalls müssen die einzelnen Behälter eines Wasserstofftanksystems jeweils mittels eines Absperrventils verschließbar sein, um einen unkontrollierten Austritt von Wasserstoff zu verhindern. Die zum Einsatz gelangenden Absperrventile sind daher als stromlos selbsttätig schließende Ventile auszuführen.

Aus dem Stand der Technik sind stromlos selbsttätige Absperrventile bekannt, die ein indirekt über ein Steuerventil gesteuertes Hauptventil aufweisen. Das Steuerventil weist üblicherweise einen Steuerventilsitz auf, der sich in einer schließend wirkenden Druckfläche des Hauptventils befindet, sowie einen Steuerventilkolben, der mittels Magnetkraft vom Steuerventilsitz abgehoben werden kann. Die den Steuerventilsitz ausbildende schließende Druckfläche am Hauptventil begrenzt hierbei einen sogenannten Steuerraum. Am gegenüberliegenden Ende ragt das Hauptventil mit seinen öffnend wirkenden Druckflächen in den sogenannten Ventilraum, der fluidisch leitend mit einem Druckspeicher in Verbindung steht. Der Steuerraum und der Ventilraum sind durch eine Drosselstelle pneumatisch voneinander getrennt. Durch Öffnen des Steuerventils wird der Steuerraum entlastet. Damit wird auch das Ventilglied des Hauptventils entlastet. Mittels der Federkraft einer Feder oder der Magnetkraft eines Magnetaktors kann dann das Hauptventil geöffnet werden. Das Schließen des Hauptventils wird üblicherweise durch eine schließend wirkende Federkraft bewirkt. Nachteil dieser Absperrventile ist jedoch ein in der Regel erhöhter Bauraumbedarf, da große Hübe zu realisieren sind, die wiederum große und/oder mehrere Magnetaktoren erfordern, so dass der Bauraumbedarf und die Kosten steigen.

Die US 2014/239207 A1 offenbart eine Ventilvorrichtung umfassend: ein Gehäuse, an dem eine Hauptdurchgangs- und eine zweite Druckkammer ausgebildet sind, wobei der Hauptdurchgang einen primären Durchgang umfasst, eine erste Druckkammer und einen sekundären Durchgang; einen Hauptventilkörper, der zwischen der ersten Druckkammer und der zweiten Druckkammer angeordnet ist.

Die US 2018/038507 offenbart eine Ventilvorrichtung umfassend: ein Hauptventilelement, das den Raum eines Ventilelements eines Gehäuses in die erste und zweite Druckkammer unterteilt; ein Dichtungselement, das so konfiguriert ist, dass es die erste und zweite Druckkammer voneinander isoliert; einen ersten Pilotdurchgang, bei dem ein Ende mit einem primären Durchgang und das andere Ende mit dem zweiten verbunden ist Druckkammer und ein erster Drossel; einen zweiten Pilotendurchgang mit einem zweiten Drossel, der an dem Hauptventilelement ausgebildet ist.

Aus der DE 10 2018 221600 A1 ist ein Verfahren zum Betreiben einer Tankvorrichtung zur Speicherung von verdichteten Fluiden mit einem Tank bekannt, mit einer Ventilvorrichtung, einer Zuführleitung, einem in der Zuführleitung angeordnetem Durchflussregelungselement und einer Steuereinheit, wobei die Ventilvorrichtung eine Magneteinrichtung umfasst.

Die WO 2020/158728 A1 offenbart ein Magnetventil für Gas, welches mit einem Gehäuse versehen ist, das einen ersten Anschluss, einen zweiten Anschluss und eine Ventilöffnung aufweist.

Die US 2015/184805 A1 offenbart eine Anordnung für ein Flüssigkeitsregelventil, einschließlich: eines Hauptventilkörpers mit einem ersten Strömungskanal, der an einem Einlass montiert ist und durch den ein Füllquellengas strömt, einen zweiten Strömungskanal, durch den ein zuführendes Quellgas strömt, und einen dritten Strömungskanal, mit dem der erste Strömungskanal und der zweite Strömungskanal verbunden sind.

In der US 6 675 831 B2 ist eine Hochdruck-Tank-Vorrichtung gezeigt, die einen Hochdrucktank aufweist, in dem ein Gas unter Hochdruck gespeichert wird, und einer Ventilvorrichtung, welche an der Gas-Auslassöffnung angeordnet ist.

Der vorliegenden Erfindung liegt die Aufgabe zugrunde, ein Absperrventil für ein Wasserstofftanksystem anzugeben, das energieeffizient betreibbar ist und wenig Bauraum benötigt.

Zur Lösung der Aufgabe wird das Absperrventil mit den Merkmalen des Anspruchs 1 angegeben. Vorteilhafte Weiterbildungen der Erfindung sind den Unteransprüchen zu entnehmen. Darüber hinaus wird ein Wasserstofftanksystem mit mindestens einem erfindungsgemäßen Absperrventil angegeben.

### Offenbarung der Erfindung

Das für ein Wasserstofftanksystem vorgeschlagene Absperrventil umfasst:
- ein Hauptventil mit einem Ventilglied, das zumindest teil- oder abschnittsweise als Magnetanker ausgeführt und in Richtung eines Hauptventilsitzes von der Federkraft einer Hauptventilfeder beaufschlagt ist,
- ein Steuerventil mit einem Ventilglied, das zumindest teil- oder abschnittsweise als Magentanker ausgeführt und in Richtung eines Steuerventilsitzes von der Federkraft einer Steuerventilfeder beaufschlagt ist,
- eine zwischen dem Hauptventil und dem Steuerventil angeordnete Magnetspule zum Erzeugen einer öffnend auf die beiden Magnetanker wirkenden Magnetkraft, wobei das Ventilglied des Hauptventils mehrteilig ausgeführt ist und zwei über eine Zugfeder gekoppelte Teile umfasst, so dass ein axialer Abstand der Teile zueinander variabel ist.

Das vorgeschlagene Absperrventil wird elektromagnetisch betätigt. Die hierzu vorgesehene Magnetspule wirkt dabei sowohl auf den Magnetanker des Steuerventils sowie auf den Magnetanker des Hauptventils. Das Öffnen des Hauptventils wird demnach zum Einen indirekt durch Öffnen des Steuerventils, zum Anderen direkt mittels Magnetkraft bewirkt. Dadurch, dass das Steuerventil eine eigene in Schließrichtung wirkende Steuerventilfeder aufweist, kann diese vergleichsweise klein ausgelegt werden. In der Folge kann das Öffnen des Steuerventils mit einer geringeren Magnetkraft bewirkt werden, was wiederum den Einsatz einer kleineren Magnetspule ermöglicht. Je kleiner der Sitzdurchmesser des Steuerventilsitzes ist, desto kleiner kann die Steuerventilfeder und damit die Magnetspule ausgelegt werden. Denn bei kleinem Sitzdurchmesser kann das sichere Schließen bzw. Dichthalten des Steuerventils bereits mit geringer Federkraft bewirkt werden.

Der Einsatz einer kleineren Magnetspule reduziert den Strombedarf des Absperrventils, wodurch die Energieeffizienz steigt. Ferner ermöglicht der Einsatz einer kleineren Magnetspule eine besonders kompakte Ausgestaltung des Absperrventils mit der Folge, dass der Bauraumbedarf sinkt. Das Absperrventil kann beispielsweise in einen Flaschenhals eines flaschenförmigen Druckgasbehälters integriert werden.

Weitere Vorteile ergeben sich durch die mehrteilige Ausführung des Ventilglieds des Hauptventils. Da die Zugfeder Teil des Ventilglieds des Hauptventils ist, ist dieses zumindest dreiteilig ausgeführt. Bei gegebenem Durchmesser des Hauptventilsitzes bewirken der Hub des Ventilglieds und die Federsteifigkeit der Zugfeder einen definierten Druckabfall, unterhalb dessen das Hauptventil öffnet. Mit Hilfe der Zugfeder kann demnach die Öffnungskraft vorgegeben werden.

In Weiterbildung der Erfindung wird vorgeschlagen, dass die über die Zugfeder gekoppelten Teile zudem über einen Mitnehmer koppelbar sind, der an einem der Teile angeordnet ist und zugleich einen Hubanschlag ausbildet. Der Mitnehmer stellt sicher, dass die Federkraft der Hauptventilfeder das Ventilglied des Hauptventils in Schließstellung sicher geschlossen hält. Die Hauptventilfeder kann somit an einem hauptventilsitzfernen Teil des Ventilglieds abgestützt werden, während das hauptventilsitznahe Teil durch den Mitnehmer in den Hauptventilsitz gedrückt wird. Beim Öffnen des Hauptventils dient der Mitnehmer als Hubanschlag und begrenzt damit den Öffnungshub des Hauptventils. Die Hubbegrenzung kann so gewählt werden, dass die Wege - insbesondere beim Schließen - klein sind, so dass sich kurze Ansprechzeiten ergeben.

Bei dem vorgeschlagenen Absperrventil sind vorzugsweise das Ventilglied des Hauptventils und das Ventilglied des Steuerventils koaxial in einem axialen Abstand zueinander angeordnet. Der axiale Abstand ermöglicht die Anordnung der Magnetspule zwischen dem Hauptventil und dem Steuerventil, so dass diese sowohl auf den Magnetanker des Hauptventils als auch auf den Magnetanker des Steuerventils einwirken kann. Die Ventilglieder von Hauptventil und Steuerventil bewegen sich dabei gegenläufig.

Bevorzugt ist das Ventilglied des Hauptventils in einem Ventilraum aufgenommen, der über eine Gasleitung mit einem Speichervolumen eines Druckgasbehälters des Tanksystems verbindbar ist, so dass der Ventilraum mit Speicherdruck beaufschlagbar ist. Das Ventilglied des Hauptventils ist somit von Speicherdruck umgeben. Da Wasserstoff üblicherweise in einem Druckgasbehälter unter Hochdruck gespeichert wird, ist das Ventilglied - bei geschlossenem Absperrventil - von Hochdruck umgeben. Da absteuerseitig in der Regel nur Niederdruck anliegt, überwiegen die in Schließrichtung auf das Ventilglied wirkenden pneumatischen Kräfte.

Ferner bevorzugt begrenzt das Ventilglied des Hauptventils, vorzugsweise das hauptventilsitzferne Teil des Ventilglieds, einen Steuerraum, der über eine Führung und/oder Zulaufdrossel mit dem Ventilraum des Hauptventils pneumatisch verbunden ist. Aufgrund der pneumatischen Verbindung herrscht bei geschlossenem Absperrventil im Steuerraum ebenfalls Speicherdruck bzw. Hochdruck. Der an der den Steuerraum begrenzende Fläche des Ventilglieds anliegende Speicher- bzw. Hochdruck bewirkt demnach ebenfalls in Schließrichtung wirkende pneumatische Kräfte. Durch Öffnen des Steuerventils kann jedoch ein Druckabfall im Steuerraum bewirkt werden, so dass die in Schließrichtung auf das Ventilglied des Hauptventils wirkenden pneumatischen Kräfte minimiert werden.

Um bei vollständig geöffnetem Steuerventil einen sicheren Druckabfall im Steuerraum zu bewirken, wird ferner vorgeschlagen, dass das Ventilglied des Steuerventils Durchströmöffnungen zur pneumatischen Verbindung des Steuerraums mit einem Ventilraum des Steuerventils aufweist. Zur Einstellung eines Arbeitsluftspalts zwischen dem Magnetanker und der Magnetspule kann zwischen diesen eine Restluftspaltscheibe angeordnet sein. In Anlage an der Restluftspaltscheibe stellen die im Magnetanker bzw. Ventilglied vorgesehenen Durchströmöffnungen die notwendige pneumatische Verbindung des Steuerraums mit dem Ventilraum des Steuerventils sicher.

Vorteilhafterweise sind das Hauptventil und das Steuerventil absteuerseitig pneumatisch verbunden. Die bei geöffnetem Steuerventil aus dem Steuerraum abströmende Gasmenge führt somit zu einem absteuerseitigen Druckanstieg, der eine auf das Ventilglied des Hauptventils in Öffnungsrichtung wirkende pneumatische Kraft bewirkt. Der steuerraumseitige Druckabfall und der absteuerseitige Druckanstieg führen schließlich zum Öffnen des Hauptventils.

Des Weiteren wird vorgeschlagen, dass das Ventilglied des Hauptventils und/oder das Ventilglied des Steuerventils zumindest abschnittsweise innerhalb der Magnetspule aufgenommen sind. Auf diese Weise kann eine Führung des jeweiligen Ventilglieds bewirkt werden. Der Magnetanker des Ventilglieds ist in diesem Fall bevorzugt als Tauchanker ausgeführt. Über diesen ist dann das Ventilglied zugleich geführt.

Bevorzugt ist zumindest das Ventilglied des Hauptventils abschnittsweise innerhalb der Magnetspule aufgenommen und damit geführt. Über die Führung kann dann zugleich eine pneumatische Verbindung des dahinterliegenden Steuerraums mit dem Ventilraum des Hauptventils hegestellt werden. Um den Hub des Ventilglieds zu begrenzen, ist vorzugsweise innerhalb der Magnetspule ein Anschlagelement aufgenommen. Ein solches kann beispielsweise durch einen Sprengring ausgebildet werden oder durch eine an einem Absatz abgestützte amagnetische Scheibe.

Ferner bevorzugt ist bzw. sind die Hauptventilfeder und/oder die Steuerventilfeder außerhalb der Magnetspule angeordnet. Der innerhalb der Magnetspule verbleibende Raum steht damit für den Magnetkreis, insbesondere für die magnetische Anzugskraft über die Grenzflächen Eisen/Luft, zur Verfügung, so dass eine zusätzliche Magnetkraft erzeugt werden kann.

Da das vorgeschlagene Absperrventil vorzugsweise in einem Wasserstofftanksystem zum Einsatz gelangt, wird darüber hinaus ein Wasserstofftanksystem vorgeschlagen, das mindestens einen Druckgasbehälter und ein erfindungsgemäßes Absperrventil umfasst. Mit Hilfe des Absperrventils kann der Druckgasbehälter sicher abgesperrt werden. Soll Gas aus dem Druckgasbehälter entnommen werden, kann das Absperrventil mit Hilfe der Magnetspule geöffnet werden, wobei der Strombedarf der Magnetspule reduziert ist, so dass die Energieeffizienz des Wasserstofftanksystems steigt. Gemäß einer bevorzugten Ausgestaltung des Wasserstofftanksystems ist das Absperrventil in den Druckgasbehälter, vorzugsweise in einen Flaschenhals des Druckgasbehälters, integriert.

Das vorgeschlagene Wasserstofftanksystem kann insbesondere in einem Brennstoffzellenfahrzeug oder in einem Fahrzeug mit Wasserstoffverbrennung zum Einsatz gelangen.

Eine bevorzugte Ausführungsform der Erfindung wird nachfolgend anhand der beigefügten Zeichnungen näher erläutert. Diese zeigen:
Fig. 1 einen schematischen Längsschnitt durch ein erfindungsgemäßes Absperrventil in Schließstellung,
Fig. 2 das Absperrventil der Fig. 1 bei geöffnetem Steuerventil,
Fig. 3 das Absperrventil der Fig. 1 während einer ersten Phase des Öffnens des Hauptventils,
Fig. 4 das Absperrventil der Fig. 1 bei vollständig geöffnetem Hauptventil und
Fig. 5 das Absperrventil der Fig. 1 mit Beenden der Bestromung der Magnetspule.

### Ausführliche Beschreibung der Zeichnungen

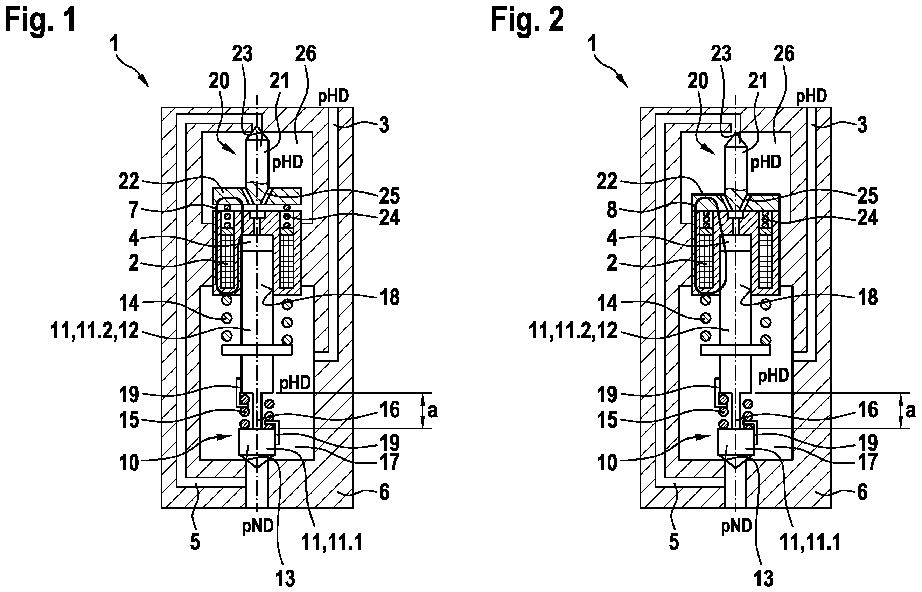

Das in den Figuren 1 bis 5 dargestellte erfindungsgemäße Absperrventil 1 zum Absperren eines Druckgasbehälters (nicht dargestellt) eines Wasserstofftanksystems (nicht dargestellt) umfasst ein Hauptventil 10 und ein Steuerventil 20, die zusammen mit einer Magnetspule 2 in einem Gehäuse 6 aufgenommen sind. Das Hauptventil 10, das Steuerventil 20 und die Magnetspule 2 sind koaxial zueinander angeordnet, wobei die Magnetspule 2 zwischen dem Hauptventil 10 und dem Steuerventil 20 angeordnet ist.

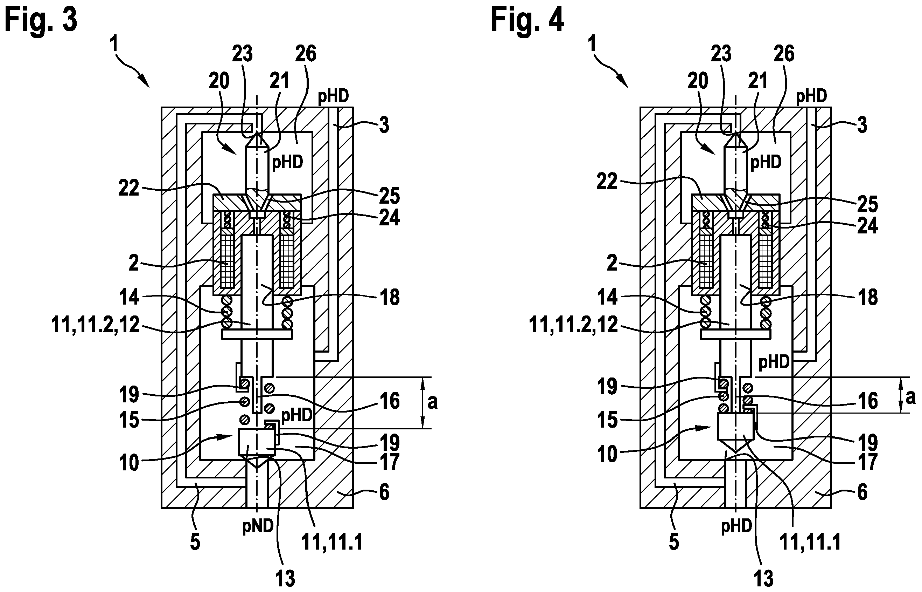

Das Hauptventil 10 weist ein in einem Ventilraum 17 aufgenommenes mehrteiliges Ventilglied 11 auf, das ein erstes Teil 11.1, ein zweites Teil 11.2 sowie eine die Teile 11.1, 11.2 koppelnde Zugfeder 15 auf. Das erste Teil 11.1 wirkt mit einem Hauptventilsitz 13 zusammen. Das zweite Teil 11.2 bildet einen Magnetanker 12 aus, der abschnittsweise innerhalb der Magnetspule 2 angeordnet und über eine innerhalb der Magnetspule 2 ausgebildete Führung geführt ist. An seinem dem ersten Teil 11.1 zugewandten Ende weist das zweite Teil 11.2 einen Mitnehmer 16 auf, der in Anlage am ersten Teil 11.1 die Federkraft einer am zweiten Teil 11.2 abgestützten Hauptventilfeder 14 auf das erste Teil 11.1 überträgt. Das Hauptventil 10 wird auf diese Weise sicher geschlossen gehalten. Beim Öffnen des Hauptventils 10 löst sich der Mitnehmer 16 vom ersten Teil 11.1, so dass sich das zweite Teil 11.2 relativ zum ersten Teil 11.1 bewegt und sich ein über den Mitnehmer 16 eingestellter axialer Abstand a zwischen den beiden Teilen 11.1, 11.2 vergrößert (siehe auch Figur 3). Fixiermittel 19 stellen dabei die Kopplung der Zugfeder 15 mit den beiden Teilen 11.1, 11.2 sicher.

Das Steuerventil 20 weist ein in einem Ventilraum 26 aufgenommenes Ventilglied 21 auf, das zugleich einen Magnetanker 22 ausbildet, der vorliegend als Flachanker ausgeführt ist. Das Ventilglied 21 wird in Richtung eines Steuerventilsitzes 23 von der Federkraft einer Steuerventilfeder 24 beaufschlagt. Die separate Steuerventilfeder 24 kann kleiner als die Hauptventilfeder 14 ausgelegt werden, da der Sitzdurchmesser des Steuerventilsitzes 23 kleiner als der Sitzdurchmesser des Hauptventilsitzes 13 gewählt werden kann. Zum Dichthalten des Steuerventilsitzes 23 werden demzufolge geringere Federkräfte benötigt. Entsprechend kann das Steuerventil 20 mit einer geringeren Magnetkraft geöffnet werden, so dass die Magnetspule 2 kleiner ausfallen kann. Auf diese Weise können der Bauraumbedarf sowie der Strombedarf der Magnetspule gesenkt werden.

Die Magnetkraft der Magnetspule 2 wird bei dem dargestellten Absperrventil 1 nicht nur zum Öffnen des Steuerventils 20 eingesetzt, sondern ferner zum Öffnen des Hauptventils 10, wenn auch nur unterstützend. Denn zunächst wird durch Öffnen des Steuerventils 20 ein weitgehender pneumatischer Druckausgleich am Ventilglied 11 des Hauptventils 10 bewirkt, so dass mit Hilfe der Magnetkraft der Magnetspule 2 das Hauptventil 10 vollständig geöffnet und offengehalten werden kann.

Neben der Federkraft der Hauptventilfeder 14 wirken auf das Ventilglied 11 des Hauptventils 10 auch pneumatische Kräfte. Denn zum Einen ist der Ventilraum 17 des Hauptventils 10 über eine Gasleitung 3 mit Speicherdruck beaufschlagt, der in einem Speichervolumen des Druckgasbehälters des Wasserstofftanksystems herrscht. Zum Anderen begrenzt das Ventilglied 11 des Hauptventils 10 innerhalb der Magnetspule 2 einen Steuerraum 4, der über die Führung 18 an den Ventilraum 17 des Hauptventils 10 angebunden ist. Die Führung 18 stellt somit eine pneumatische Verbindung zwischen dem Steuerraum 4 und dem Ventilraum 17 her, wobei der Zulauf von Gas über die Führung 18 in den Steuerraum 4 gedrosselt erfolgt, um bei geöffnetem Steuerventil 20 einen schnellen Druckabfall im Steuerraum 4 bewirken zu können. Denn steuerventilseitig ist der Steuerraum 4 über Durchströmöffnungen 25 im Ventilglied 21 mit dem Ventilraum 26 des Steuerventils 20 verbunden, so dass bei geöffnetem Steuerventil 20 Gas aus dem Steuerraum 4 über den Steuerventilsitz 23 in eine absteuerseitige Gasleitung 5 abströmen kann. Über die Gasleitung 5 sind das Steuerventil 20 und das Hauptventil 10 absteuerseitig verbunden.

Die Funktionsweise des Absperrventils 1 ist wie folgt:
Bei unbestromter Magnetspule 2 ist das Absperrventil 1 geschlossen und wird über die Federkräfte der Steuerventilfeder 24 und der Hauptventilfeder 14 sowie die anliegenden pneumatischen Druckverhältnisse geschlossen gehalten. Denn in den Ventilräumen 17 und 26 sowie im Steuerraum 4 liegt jeweils Speicherdruck bzw. Hochdruck pHD an, beispielsweise ein Druck von über 800 barA. In der Gasleitung 5 herrscht dagegen Niederdruck pND, beispielsweise Atmosphärendruck (siehe Figur 1).

Zum Öffnen des Absperrventils 1 wird die Magnetspule 2 bestromt. Dies führt zum Aufbau eines Magnetkreises 7 dessen Magnetkraft auf den Magnetanker 22 bzw. das Ventilglied 21 des Steuerventils 20 wirkt. Im Magnetkreis 7 des Steuerventils 20 befindet sich ein Bereich erhöhten magnetischen Widerstands, der in der Figur 1 exemplarisch als Querschnittsverengung in Form einer Eindrehung dargestellt ist. Alternativ kann der Widerstand durch Verwendung eines Materials erhöht werden, das einen größeren magnetischen Widerstand aufweist. Der erhöhte magnetische Widerstand führt dazu, dass die Feldlinien sich auch einen alternativen Weg über den Luftspalt zwischen dem Magnetanker 22 und der Magnetspule 2 suchen, wodurch die gewünschte Krafteinwirkung auf das Ventilglied 21 des Steuerventils 20 erzielt wird, um das Steuerventil 20 zu öffnen (siehe Figur 2).

Bei geöffnetem Steuerventil 20 strömt Gas aus dem Steuerraum 4 über den Steuerventilsitz 23 in die Gasleitung 5 ab, was einen Druckabfall im Steuerraum 4 bewirkt, da über die Führung 18 deutlich weniger Gas aus dem Ventilraum 17 in den Steuerraum 4 nachströmen kann als über den Steuerventilsitz 23 aus dem Steuerraum 4 abströmt. Der Druckabfall im Steuerraum 4 bewirkt, dass auf das zweite Teil 11.2 des Ventilglieds 11 des Hauptventils 10 zunehmend öffnende pneumatische Kräfte wirken. Da das zweite Teil 11.2 zugleich den Magnetanker 12 ausbildet, wirken auf diesen zugleich die Magnetkräfte der Magnetspule 2. Bei vollständig geöffnetem Steuerventil 20 ergibt sich eine Verringerung des magnetischen Widerstands im Magnetkreis 7 des Steuerventils 20, was wiederum zu einer Erhöhung des magnetischen Flusses in einem Magnetkreis 8 des Hauptventils 10 führt. Dadurch erhöht sich die magnetische Kraft auf die Grenzfläche Eisen/Luft an der durch die Führung 18 begrenzten Fläche des Ventilglieds 11 des Hauptventils 10. Die Kombination der Kräfte aus dem Magnetkreis 8 und der pneumatischen Kräfte führt dann zu einer Öffnungsbewegung des Ventilglieds 11 des Hauptventils 10, wobei sich zunächst nur das zweite Teil 11.2 des Ventilglieds 11 bewegt (siehe Figur 3). Durch die Bewegung bzw. den Hub des zweiten Teils 11.2 und die Kopplung des zweiten Teils 11.2 mit dem ersten Teil 11.1 über die Zugfeder 15 wirkt auf das erste Teil 11.1 eine definierte Öffnungskraft. Bei gegebenem Durchmesser des Hauptventilsitzes 13 ergibt sich somit aus dem Hub und der Federsteifigkeit der Zugfeder 15 ein definierter Druckabfall, unterhalb dessen das Hauptventil 10 öffnet (siehe Figur 4). Das Öffnen des Hauptventils 10 bewirkt einen zügigen Druckausgleich, so dass auch in der Gasleitung 5 der Hochdruck pHD herrscht. Das Hauptventil 10 und das Steuerventil 20 werden im Zustand völligen Druckausgleichs rein magnetisch gegen die Federkräfte der Hauptventilfeder 14 und der Steuerventilfeder 24 offengehalten, was durch die minimalen Luftspalte auch mit einem geringen sogenannten Haltestrom an der Magnetspule 2 gelingt. Auf diese Weise kann die Verlustleistung im Normalbetrieb sehr klein gehalten werden.

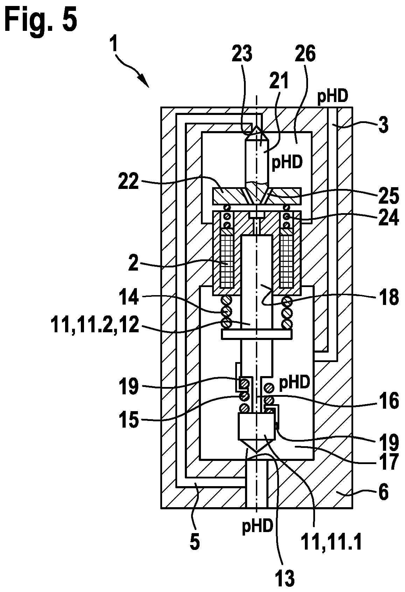

Zum Schließen des Absperrventils 1 wird die Bestromung der Magnetspule 2 beendet, so dass die Steuerventilfeder 24 das Ventilglied 21 zurück in den Steuerventilsitz 23 stellt und das Steuerventil 20 schließt (siehe Figur 5). Das heißt, dass kein Gas mehr aus dem Steuerraum 4 abströmen kann, aber Gas über die Führung 18 in den Steuerraum 4 gelangt. In der Folge steigt der Druck im Steuerraum 4 wieder an. Der Druckanstieg im Steuerraum 4 bewirkt eine in Schließrichtung auf das Ventilglied 11 des Hauptventils 10 wirkende pneumatische Kraft. Diese in Kombination mit der Federkraft der Hauptventilfeder 14 führt dann zum Schließen des Hauptventils 10 (siehe Figur 1). Der Mitnehmer 16 stellt dabei die Kopplung des ersten Teils 11.1 mit dem zweiten Teil 11.2 des Ventilglieds 11 sicher. Ohne Mitnehmer 16 würde das erste Teil 11.1 zeitlich versetzt, das heißt später schließen, und damit über einen längeren Zeitraum Gas aus dem Ventilraum 17 in die Gasleitung 5 abströmen. Der zeitliche Verzug müsste dann über ein Steuergerät - soweit es der Anwendungsfall zulässt - vorgehalten werden.

Der Mitnehmer 16 sorgt zudem bei unbestromter Magnetspule 2 für eine definierte und stabile Positionierung des ersten Teils 11.1 in Bezug auf den Hauptventilsitz 13. Denn die Zugfeder 15 bewirkt auch in Schließstellung eine geringe öffnende Kraft, so dass absteuerseitige pneumatische Druckschwankungen zu einem ungewollten Öffnen des Hauptventils 10 führen könnten. Mit Hilfe des Mitnehmers 16 kann dies verhindert werden.

## Patentansprüche

1. Absperrventil (1) für ein Wasserstofftanksystem, umfassend
- ein Hauptventil (10) mit einem Ventilglied (11), das zumindest teil- oder abschnittsweise als Magnetanker (12) ausgeführt und in Richtung eines Hauptventilsitzes (13) von der Federkraft einer Hauptventilfeder (14) beaufschlagt ist,
- eine zwischen dem Hauptventil (10) und dem Steuerventil (20) angeordnete Magnetspule (2) zum Erzeugen einer öffnend auf den Magnetanker (12, 22) wirkenden Magnetkraft, , **dadurch gekennzeichnet, dass** ein Steuerventil (20) mit einem Ventilglied (21), das zumindest teil- oder abschnittsweise als Magentanker (22) ausgeführt und in Richtung eines Steuerventilsitzes (23) von der Federkraft einer Steuerventilfeder (24) beaufschlagt ist, wobei die Magnetspule (2) zum Erzeugen einer öffnend auf den Magnetanker (12, 22) wirkenden Magnetkraft auf die beiden Magnetanker (12, 22) wirkt und wobei
eine zwischen dem Hauptventil (10) und dem Steuerventil (20) angeordnete Magnetspule (2) zum Erzeugen einer öffnend auf den Magnetanker (12, 22) wirkenden Magnetkraft wobei das Ventilglied (11) des Hauptventils (10) mehrteilig ausgeführt ist und zwei über eine Zugfeder (15) gekoppelte Teile (11.1, 11.2) umfasst, so dass ein axialer Abstand (a) der Teile (11.1, 11.2) zueinander variabel ist.

2. Absperrventil (1) nach Anspruch 1,
**dadurch gekennzeichnet, dass** die über die Zugfeder (15) gekoppelten Teile (11.1, 11.2) zudem über einen Mitnehmer (16) koppelbar sind, der an einem der Teile (11.1, 11.2) angeordnet ist und zugleich einen Hubanschlag ausbildet.

3. Absperrventil (1) nach Anspruch 1 oder 2,
**dadurch gekennzeichnet, dass** das Ventilglied (11) des Hauptventils (10) und das Ventilglied (21) des Steuerventils (20) koaxial in einem axialen Abstand zueinander angeordnet sind.

4. Absperrventil (1) nach einem der vorhergehenden Ansprüche,
**dadurch gekennzeichnet, dass** das Ventilglied (11) des Hauptventils (10) in einem Ventilraum (17) aufgenommen ist, der über eine Gasleitung (3) mit einem Speichervolumen eines Druckgasbehälters des Tanksystems verbindbar ist, so dass der Ventilraum (17) mit Speicherdruck beaufschlagbar ist.

5. Absperrventil (1) nach einem der vorhergehenden Ansprüche,
**dadurch gekennzeichnet, dass** das Ventilglied (11) des Hauptventils (10), vorzugsweise das hauptventilsitzferne Teil (11.2) des Ventilglieds (11), einen Steuerraum (4) begrenzt, der über eine Führung (18) und/oder Zulaufdrossel mit dem Ventilraum (17) des Hauptventils (10) pneumatisch verbunden ist.

6. Absperrventil (1) nach Anspruch 5,
**dadurch gekennzeichnet, dass** das Ventilglied (21) des Steuerventils (20) Durchströmöffnungen (25) zur pneumatischen Verbindung des Steuerraums (4) mit einem Ventilraum (26) des Steuerventils (20) aufweist.

7. Absperrventil (1) nach einem der vorhergehenden Ansprüche,
**dadurch gekennzeichnet, dass** das Hauptventil (10) und das Steuerventil (20) über eine Gasleitung (5) absteuerseitig pneumatisch verbunden sind.

8. Absperrventil (1) nach einem der vorhergehenden Ansprüche,
**dadurch gekennzeichnet, dass** das Ventilglied (11) des Hauptventils (10) und/oder das Ventilglied (21) des Steuerventils (20) zumindest abschnittsweise innerhalb der Magnetspule (2) aufgenommen sind, wobei vorzugsweise innerhalb der Magnetspule (2) ein Anschlagelement zur Hubbegrenzung aufgenommen ist.

9. Absperrventil (1) nach einem der vorhergehenden Ansprüche,
**dadurch gekennzeichnet, dass** die Hauptventilfeder (14) und/oder die Steuerventilfeder (24) außerhalb der Magnetspule (2) angeordnet ist bzw. sind.

10. Wasserstofftanksystem, umfassend mindestens einen Druckgasbehälter und ein Absperrventil (1) nach einem der vorhergehenden Ansprüche, wobei vorzugsweise das Absperrventil (1) in den Druckgasbehälter, weiterhin vorzugsweise in einen Flaschenhals des Druckgasbehälters integriert ist.

## Claims

1. Shut-off valve (1) for a hydrogen tank system, comprising
- a main valve (10) with a valve member (11) which is at least partially or sectionally in the form of a magnet armature (12) and is subjected to the spring force of a main valve spring (14) in the direction of a main valve seat (13),
- a magnet coil (2) which is arranged between the main valve (10) and the control valve (20) and serves for generating a magnetic force which acts on the magnet armature (12, 22) in an opening direction, **characterized in that** a control valve (20) with a valve member (21) which is at least partially or sectionally in the form of a magnet armature (22) and is subjected to the spring force of a control valve spring (24) in the direction of a control valve seat (23), wherein the magnet coil (2) for generating a magnetic force acting on the magnet armature (12, 22) in an opening direction acts on the two magnet armatures (12, 22), and wherein
a magnet coil (2) which is arranged between the main valve (10) and the control valve (20) and serves for generating a magnetic force which acts on the magnet armature (12, 22) in an opening direction, wherein the valve member (11) of the main valve (10) is of multi-part form and comprises two parts (11.1, 11.2) which are coupled via a tension spring (15) so that an axial distance (a) of the parts (11.1, 11.2) from one another is variable.

2. Shut-off valve (1) according to Claim 1,
**characterized in that** the parts (11.1, 11.2) coupled via the tension spring (15) are moreover couplable via a driver (16) which is arranged on one of the parts (11.1, 11.2) and which at the same time forms a stroke stop.

3. Shut-off valve (1) according to Claim 1 or 2,
**characterized in that** the valve member (11) of the main valve (10) and the valve member (21) of the control valve (20) are arranged coaxially at an axial distance from one another.

4. Shut-off valve (1) according to one of the preceding claims,
**characterized in that** the valve member (11) of the main valve (10) is accommodated in a valve chamber (17) which, via a gas line (3), is connectable to a storage volume of a compressed gas container of the tank system so that the valve chamber (17) is able to be subjected to storage pressure.

5. Shut-off valve (1) according to one of the preceding claims,
**characterized in that** the valve member (11) of the main valve (10), preferably that part (11.2) of the valve member (11) which is remote from the main valve seat, delimits a control chamber (4) which is connected pneumatically via a guide (18) and/or inlet throttle to the valve chamber (17) of the main valve (10).

6. Shut-off valve (1) according to Claim 5,
**characterized in that** the valve member (21) of the control valve (20) has throughflow openings (25) for pneumatic connection of the control chamber (4) to a valve chamber (26) of the control valve (20).

7. Shut-off valve (1) according to one of the preceding claims,
**characterized in that** the main valve (10) and the control valve (20) are connected pneumatically on the discharge side via a gas line (5).

8. Shut-off valve (1) according to one of the preceding claims,
**characterized in that** the valve member (11) of the main valve (10) and/or the valve member (21) of the control valve (20) are/is accommodated at least sectionally within the magnet coil (2), wherein preferably a stop element for stroke limitation is accommodated within the magnet coil (2).

9. Shut-off valve (1) according to one of the preceding claims,
**characterized in that** the main valve spring (14) and/or the control valve spring (24) are/is arranged outside the magnet coil (2).

10. Hydrogen tank system comprising at least one compressed gas container and a shut-off valve (1) according to one of the preceding claims, wherein the shut-off valve (1) is preferably integrated into the compressed gas container, furthermore preferably into a bottle neck of the compressed gas container.

## Revendications

1. Soupape d'arrêt (1) pour un système de réservoir d'hydrogène, comprenant
- une soupape principale (10) avec un organe de soupape (11) qui est réalisé au moins partiellement ou par sections sous forme d'induit magnétique (12) et qui est sollicité en direction d'un siège de soupape principale (13) par la force de ressort d'un ressort de soupape principale (14),
- une bobine magnétique (2) agencée entre la soupape principale (10) et la soupape de commande (20) pour générer une force magnétique agissant en ouverture sur l'induit magnétique (12, 22), **caractérisée en ce qu'**une soupape de commande (20) avec un organe de soupape (21), qui est réalisé au moins partiellement ou par sections sous forme d'induit magnétique (22) et qui est sollicité en direction d'un siège de soupape de commande (23) par la force de ressort d'un ressort de soupape de commande (24), la bobine magnétique (2) agissant sur les deux induits magnétiques (12, 22) pour générer une force magnétique agissant en ouverture sur l'induit magnétique (12, 22) et
une bobine magnétique (2) agencée entre la soupape principale (10) et la soupape de commande (20) pour générer une force magnétique agissant en ouverture sur l'induit magnétique (12, 22), l'organe de soupape (11) de la soupape principale (10) étant réalisé en plusieurs parties et comprenant deux parties (11.1, 11.2) couplées par l'intermédiaire d'un ressort de traction (15), de telle sorte qu'une distance axiale (a) des parties (11.1, 11.2) entre elles est variable.

2. Soupape d'arrêt (1) selon la revendication 1,
**caractérisée en ce que** les parties (11.1, 11.2) couplées par l'intermédiaire du ressort de traction (15) peuvent en outre être couplées par l'intermédiaire d'un entraîneur (16) qui est agencé sur l'une des parties (11.1, 11.2) et réalise en même temps une butée de levage.

3. Soupape d'arrêt (1) selon la revendication 1 ou la revendication 2,
**caractérisée en ce que** l'organe de soupape (11) de la soupape principale (10) et l'organe de soupape (21) de la soupape de commande (20) sont agencés coaxialement à une distance axiale l'un de l'autre.

4. Soupape d'arrêt (1) selon l'une quelconque des revendications précédentes, **caractérisée en ce que** l'organe de soupape (11) de la soupape principale (10) est logé dans une chambre de soupape (17) qui peut être reliée par l'intermédiaire d'une conduite de gaz (3) à un volume de stockage d'un récipient de gaz sous pression du système de réservoir, de telle sorte que la chambre de soupape (17) peut être alimentée en pression de stockage.

5. Soupape d'arrêt (1) selon l'une quelconque des revendications précédentes, **caractérisée en ce que** l'organe de soupape (11) de la soupape principale (10), de préférence la partie (11.2) de l'organe de soupape (11) éloignée du siège de soupape principale, délimite une chambre de commande (4) qui est reliée pneumatiquement à la chambre de soupape (17) de la soupape principale (10) par l'intermédiaire d'un guide (18) et/ou d'un étranglement d'arrivée.

6. Soupape d'arrêt (1) selon la revendication 5,
**caractérisée en ce que** l'élément de soupape (21) de la soupape de commande (20) présente des ouvertures de passage (25) pour la liaison pneumatique de la chambre de commande (4) avec une chambre de soupape (26) de la soupape de commande (20).

7. Soupape d'arrêt (1) selon l'une quelconque des revendications précédentes, **caractérisée en ce que** la soupape principale (10) et la soupape de commande (20) sont reliées pneumatiquement côté commande par l'intermédiaire d'une conduite de gaz (5).

8. Soupape d'arrêt (1) selon l'une quelconque des revendications précédentes, **caractérisée en ce que** l'organe de soupape (11) de la soupape principale (10) et/ou l'organe de soupape (21) de la soupape de commande (20) sont logés au moins par sections à l'intérieur de la bobine magnétique (2), un élément de butée étant de préférence logé à l'intérieur de la bobine magnétique (2) pour limiter la course.

9. Soupape d'arrêt (1) selon l'une quelconque des revendications précédentes, **caractérisée en ce que** le ressort de soupape principale (14) et/ou le ressort de soupape de commande (24) est/sont agencé(s) à l'extérieur de la bobine magnétique (2).

10. Système de réservoir d'hydrogène, comprenant au moins un récipient de gaz sous pression et une soupape d'arrêt (1) selon l'une quelconque des revendications précédentes, dans lequel de préférence la soupape d'arrêt (1) est intégrée dans le récipient de gaz sous pression, en outre de préférence dans un goulot du récipient de gaz sous pression.
